# EUROPEAN PATENT APPLICATION

(11) **EP 3 425 762 A1**
(43) Date of publication of application: **09.01.2019**
(21) Application number: 17179276.5
(22) Date of filing: 03.07.2017
(51) Int. Cl.: H02J 7/00, B60L 11/18, H02J 7/04, H02J 7/08

(54) **METHOD AND ELECTRONIC DEVICE FOR MANAGING CHARGING**

(71) Applicant: Ningbo Geely Automobile Research & Development Co. Ltd., Hangzhou Bay New District Ningbo 315336 (CN)
(72) Inventor: AXELSSON, Bengt, 421 65 VÄSTRA FRÖLUNDA (SE); DAVID, Sandeep, 411 05 GÖTEBORG (SE); PLYLAHAN, Nareerat, 417 55 GÖTEBORG (SE); GORANTLA NARAYANA MURTHY, Sri Vishnu, 416 81 GÖTEBORG (SE)
(74) Representative: Zacco Sweden AB

(57) **Abstract**

The invention proposes an electronic device and a method performed in an electronic device for managing charging of a battery for reducing calendar aging and improving the battery life time. The method comprising obtaining a first State of Charge value of the battery at a first time, receiving input of a second time that is indicating a time of a day that is after the first time, when the battery should be charged to a second State of Charge value, determining a charging scheme, and executing the determined charging scheme for charging of the battery to the second state of charge value.

## Description

### TECHNICAL FIELD

The invention pertains to the field of charging and calendar aging of a battery.

### BACKGROUND

Today it is very popular to use batteries for powering all kinds of electrical devices. Not only smaller home electronic devices such as smartphones, tablets and portable computers but also electrical devices such as electrical drilling machines, electrical lawn mowers, electrical bikes and electrical vehicles make use of batteries. There are different types of batteries, and in particular batteries that are rechargeable are commonly used.

A battery that is rechargeable has a certain so called State of Charge. The units of State of Charge, SOC, are percentage points where 100% means fully charged battery and 0% means a fully discharged battery, i.e. a battery that is "empty". A battery is traditionally charged to a certain State of Charge, SOC. Then, when the battery is connected to an electronic device that consumes power form the battery, the battery is being discharged. After a certain time of usage, the battery is discharged to a lower State of Charge, SOC, and needs to be charged to a higher State of Charge, SOC, again. After the battery has been charged to a certain State of Charge, SOC, the electronic device can be used again. This is then repeated as long as the battery can be charged again.

There are different types of batteries that are rechargeable. One battery type that is rechargeable is the lithium-ion battery. Lithium-ion batteries are one of the most popular type of rechargeable batteries. Lithium-ion batteries are common in home electronics but also in vehicles.

Over their life time, batteries age with reduced cell energy capacity due to chemical changes to the electrodes.

### SUMMARY

Aging in batteries, for example lithium ion batteries, can be categorized as cyclic aging and calendar aging.

Cyclic aging refers to the aging caused by the usage of the battery. In particular the number of cycles, i.e. the number of times the battery has been charged and discharged, cause the cyclic aging.

Calendar aging represents the aging due to that a battery is stored or unused. It is known in the art that the State of Charge, SOC, at which a battery is stored at for long periods of time affects the rate at which the battery ages. More specifically, aging increases as the storage State of Charge, SOC, of the battery is increased. For batteries used in e.g. passenger vehicles, calendar aging can have significant contribution to the aging of the battery since the vehicle can stand unused for the majority of a day. There are also other electronic devices that are unused for a longer periods of time where calendar aging can have a significant effect.

Today there is a demand for optimized utilization of batteries in order to reduce calendar aging and improving the battery life time.

An object of the present invention is to provide a method and a device which seek to mitigate, alleviate, or eliminate one or more of the above-identified deficiencies in the art and disadvantages singly or in any combination.

The invention proposes a method performed in an electronic device for managing charging of a battery for reducing calendar aging and improving the battery life time. The method comprising obtaining a first State of Charge value of the battery at a first time. This is followed by receiving input of a second time that is indicating a time of a day that is after the first time, when the battery should be charged to a second State of Charge value. The second State of Charge value being higher than the first State of Charge value. The method then further comprises determining, based on the first State of Charge value and the time from the first time to the second time, a charging scheme out of a number of pre-defined charging schemes that is applicable for charging of the battery to the second State of Charge value. This is then followed by executing the determined charging scheme for charging of the battery to the second state of charge value. Hence, the battery will be charged to the second State of Charge value according to an applicable charging scheme that is adapted for reducing calendar aging.

According to an aspect, at least one of the pre-defined charging schemes comprises maintaining the first State of Charge value of the battery during a period between the first time and a third time, the third time being between the first time and the second time, followed by charging the battery during a period from the third time to the second time to the second State of Charge value. Hence, the calendar aging decreases as the State of Charge of the battery is kept as low and as long as possible before charging the battery. In other words, the battery is charged so that the State of Charge of the battery reaches the second State of Charge value at the second time and not before that.

According to an aspect, at least one of the pre-defined charging schemes comprises charging the battery during a period between the first time and a fourth time, the fourth time being between the first time and the second time, to a third State of Charge value, the third State of Charge value being between the first State of Charge value and the second State of Charge value, followed by maintaining the battery at the third State of Charge value during a period a between the fourth time and a fifth time, the fifth time being between the fourth time and the second time, followed by charging the battery to the second State of Charge value during a period a between the fifth time and the second time. Hence, the degree of calendar aging decreases as the State of Charge of the battery is kept at a lower level, a level that at the same time provides for utilization of the battery.

According to an aspect, the third State of Charge value is a pre-set value for reducing calendar aging. Hence, an optimized State of Charge value that balance the calendar aging and at the same time provides a utilization of the battery can be chosen by e.g. a manufacturer of the battery or the device utilizing the battery.

According to an aspect the third State of Charge value is a manually entered value by a user at the electronic device for reducing calendar aging. Hence, an optimized State of Charge value that balance the calendar aging and at the same time provides a utilization of the battery can be chosen by e.g. a user of a battery or device utilizing the battery. This means that a user can decide what third State of Charge level that is wanted in order to utilize the battery in a most effective way considering calendar aging.

According to an aspect the charging scheme is dependent on at least one of the first State of Charge value; the second State of Charge value; or the time needed to charge the battery from the first State of Charge value to the second State of Charge value. This means that different charging schemes can be applied accordingly.

According to an aspect the second State of Charge value is the maximum charging capacity of the battery. In other words, charging the battery to the second State of Charge value means charging the battery until it is fully charged.

According to an aspect the second State of Charge value is below the maximum charging capacity of the battery and manually entered by a user at the electronic device. This means that the second State of Charge value can be set by a user of the battery or device utilizing the battery.

The invention further proposes an electronic device for managing charging of a battery for reducing calendar aging and improving the battery life time, the electronic device comprising a memory and a processing circuitry. The processing circuitry is configured to cause the electronic device to obtain a first State of Charge value of the battery at a first time and receive input of a second time that is indicating a time of a day that is after the first time, when the battery should be charged to a second State of Charge value, the second State of Charge value being higher than the first State of Charge value. The processing circuitry is then configured to cause the electronic device to determine, based on the first State of Charge value and the time from the first time to the second time, a charging scheme out of a number of pre-defined charging schemes that is applicable for charging of the battery to the second State of Charge value and execute the determined charging scheme for charging of the battery to the second state of charge value. Hence, the battery will be charged to the second State of Charge value according to an applicable charging scheme that is adapted for decreasing calendar aging.

According to an aspect at least one of the pre-defined charging schemes comprises maintaining the first State of Charge value of the battery during a period between the first time and a third time, the third time being between the first time and the second time, followed by charging the battery during a period from the third time to the second time to the second State of Charge value. Hence, the degree of calendar aging decreases as the State of Charge of the battery is kept as low and as long as possible before charging the battery. In other words, the battery is charged so that the State of Charge of the battery reaches the second State of Charge value at the second time and not before that.

According to an aspect at least one of the pre-defined charging schemes comprises charging the battery during a period between the first time and a fourth time, the fourth time being between the first time and the second time, to a third State of Charge value, the third State of Charge value being between the first State of Charge value and the second State of Charge value, followed by maintaining the battery at the third State of Charge value during a period a between the fourth time and a fifth time, the fifth time being between the fourth time and the second time, followed by charging the battery to the second State of Charge value during a period a between the fifth time and the second time. Hence, the calendar aging decreases as the State of Charge of the battery is kept at a lower level, a level that at the same time provides for usage of the battery.

According to an aspect the third State of Charge value is a pre-set value for reducing calendar aging. Hence, an optimized State of Charge value that balance the calendar aging and at the same time provides a utilization of the battery can be chosen by e.g. a manufacturer of a battery or device utilizing the battery.

According to an aspect the third State of Charge value is a manually entered value by a user at the electronic device for reducing calendar aging. This means that the second State of Charge value can be set by a user of the battery or device utilizing the battery.

According to an aspect the second State of Charge value is the maximum charging capacity of the battery. In other words, charging the battery to the second State of Charge value means charging the battery until it is fully charged.

According to an aspect the second State of Charge value is below the maximum charging capacity of the battery and manually entered by a user at the electronic device. This means that the second State of Charge value can be set by a user of the battery or device utilizing the battery.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
Figure 1 illustrates calendar aging at different State of Charge values.
Figure 2 illustrates an exemplary charging scheme according to an aspect.
Figure 3 illustrates an exemplary charging scheme according to an aspect.
Figure 4a illustrates examples of an electronic device being a charging unit within a battery device connected to a power outlet according to an aspect.
Figure 4b illustrates examples of an electronic device being a charging unit separated from a battery device connected to a power outlet according to an aspect.
Figure 4c illustrates examples of an electronic device being a portable electronic device connected to a charging unit via a communication network according to an aspect.
Figure 4d illustrates examples of an electronic device being a remote server connected to a charging unit via a communication network according to an aspect.
Figure 5 illustrates a flow chart of the method steps according to an aspect.

### DETAILED DESCRIPTION

Aspects of the present invention will be described more fully hereinafter with reference to the accompanying drawings. The method and device disclosed herein can, however, be realized in many different forms and should not be construed as being limited to the aspects set forth herein. Like numbers in the drawings refer to like elements throughout.

The terminology used herein is for the purpose of describing particular aspects of the invention only, and is not intended to limit the invention. As used herein, the singular forms "a", "an" and "the" are intended to include the plural forms as well, unless the context clearly indicates otherwise.

In some implementations and according to some aspects of the invention, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved.

In the drawings and specification, there have been disclosed exemplary aspects of the invention. However, many variations and modifications can be made to these aspects without substantially departing from the principles of the present invention. Thus, the disclosure of the invention should be regarded as illustrative rather than restrictive, and not as being limited to the particular aspects discussed above. Accordingly, although specific terms are employed, they are used in a generic and descriptive sense only and not for purposes of limitation.

It should further be noted that any reference signs do not limit the scope of the claims, that the example embodiments may be implemented at least in part by means of both hardware and software, and that several "means", "units" or "devices" may be represented by the same item of hardware.

Today it is common to use batteries to power all kinds of electrical devices. A battery that is rechargeable has a certain State of Charge, SOC. The units of State of Charge, SOC, are percentage points where 100% means fully charged battery and 0% means a fully discharged battery, i.e. a battery that is "empty". A battery is traditionally charged to a certain State of Charge, SOC. Then, when the battery is connected to an electronic device that consumes power form the battery, the battery is being discharged. After a certain time of usage, the battery is discharged to a lower State of Charge, SOC, and needs to be charged to a higher State of Charge, SOC, again. After the battery has been charged to a certain State of Charge, SOC, the electronic device can be used again. This is then repeated as long as the battery can be charged again.

Batteries age with reduced battery cell energy capacity due to chemical changes to the electrodes. Aging in batteries, for example in lithium ion batteries, can be categorized as cyclic aging and calendar aging.

Cyclic aging refers to the aging caused by the usage of the battery. In particular the number of cycles, i.e. the number of times the battery has been charged and discharged, cause the cyclic aging.

Calendar aging represents the aging due to that a battery is stored or unused. It is known in the art, e.g. by the publication P. Keil et al. "Calendar Aging of Lithium-Ion Batteries I. Impact of the Graphite Anode on Capacity Fade", Journal of The Electrochemical Society, 163 (9) A1872-A1880 (2016), that the State of Charge, SOC, at which a battery is stored at for long periods of time affects the rate at which it ages. More specifically, aging increases as the storage State of Charge, SOC, of the battery is increased. For batteries used in e.g. passenger vehicles, calendar aging can have significant contributions to the aging of the battery since the vehicle can stand unused for the majority of a day. In other words, if a vehicle with a battery having a high State of Charge, SOC, is e.g. parked and not used for a long period of time, the more is the negative effect on the battery with respect to calendar aging.

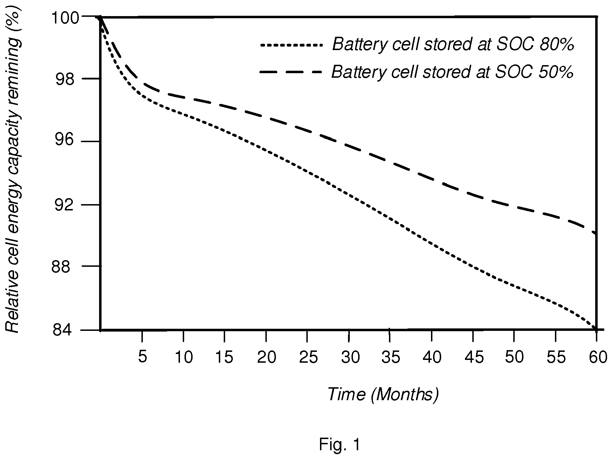

Fig. 1 illustrates the relative cell energy capacity remaining in percentage over time. Fig. 1 shows the case where a battery cell stored for a period of 60 months, i.e. 5 years, at a State of Charge, SOC, of 80% ages significantly more than a battery stored at a State of Charge, SOC, of 50%. This implies that if high values of State of Charge, SOC, are avoided when the battery is not used the lifetime of the battery can be substantially improved.

In the example when a battery is used in a vehicle, there is often a rest period when a vehicle is not used that can affect the aging of a battery. The same applies to any battery device that has a certain rest time.

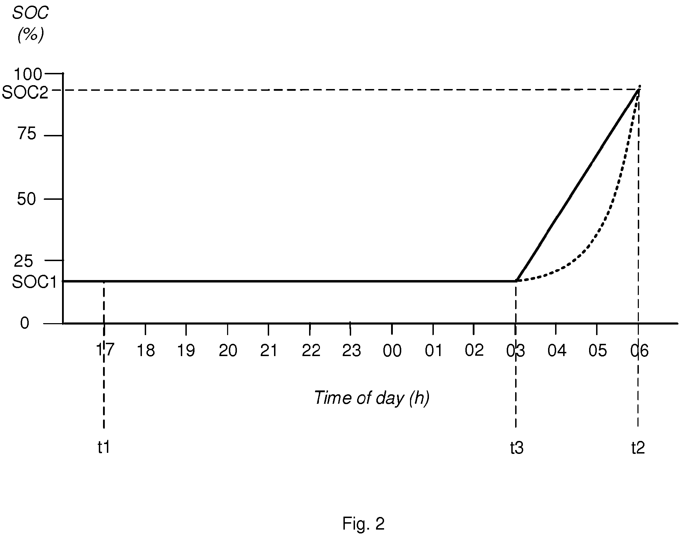

In the example of a vehicle, the inventors identified that there is a need for a solution for improving the battery life by adapting the charging strategy according to the latest time by which the battery needs to be fully charged so that the vehicle is ready to be driven for its full electric range at that time. This charging strategy is particularly applicable to the typical electric vehicle involving charging overnight. In this example, if the user only needs the battery to be charged by the next morning, and since charging takes between an hour or two, the charging strategy shall be developed such that the battery remains at its drained state, i.e. low State of Charge, SOC, overnight and only start charging so that it is ready by the required pre-defined time. Thus, the storage time spent by the battery at a high State of Charge, SOC, is minimized. This example is illustrated in Fig 2, in particular the battery remains at its drained state, i.e. low State of Charge, SOC, until 03:00. At 03:00 charging is started so that the battery is charged and ready to be used by the required pre-defined time, in this example at 06:00 in the morning.

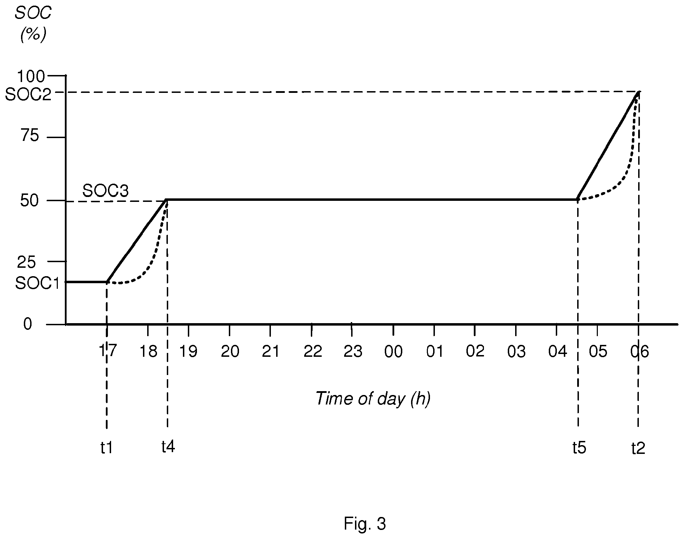

Another example where this charging strategy is also implemented is shown in Fig 3. Here the battery is initially charged to a pre-set level, in this example 50%, so that the user has a certain amount of battery capacity just in case of an emergency. This pre-set value of State of Charge, SOC, can be chosen by the user, and should be higher than the minimum of State of Charge, SOC, but not greater than 50% so that the effects of calendar aging can be minimized. In Fig.3 50% State of Charge, SOC, has been chosen as the pre-set value.

The invention proposes an electronic device 1 and a method performed in an electronic device 1 that both now will be described in more detail with reference to the figures. The battery 40 can be any battery used in any battery device 400 such as a portable electronic device, a smartphone, a tablet, an electrical drilling machine, an electrical lawn mower, an electrical bike or an electrical vehicle etc.

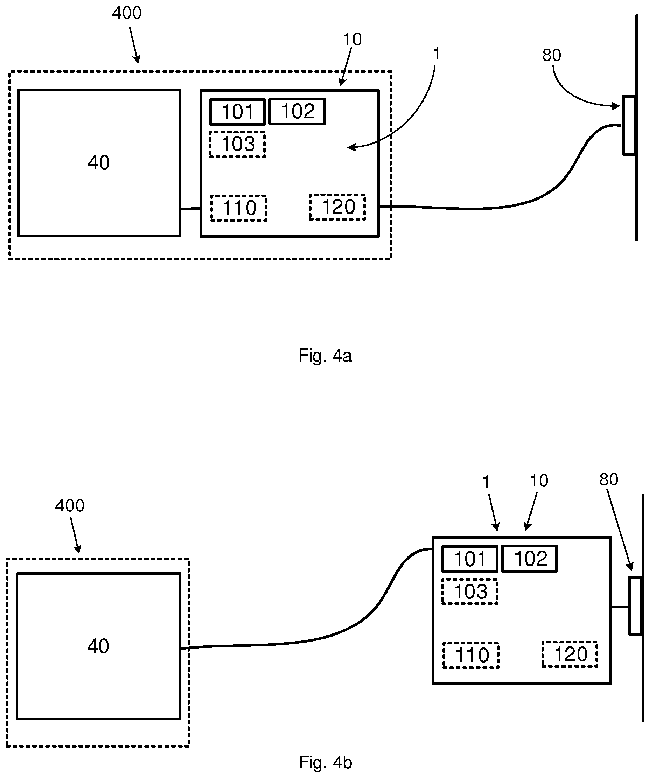

Reference is now made to Fig. 4a-d. The invention proposes an electronic device 1 for managing charging of a battery 40 for reducing calendar aging and improving the battery life time, the electronic device 1 comprising a memory 101 and a processing circuitry 102. The memory 101 can be a Random-access Memory, RAM; a Flash memory; a hard disk; or any storage medium that can be electrically erased and reprogrammed. The processing circuitry 102 can be a Central Processing Unit, CPU, or any processing unit carrying out instructions of a computer program or operating system.

According to an aspect, as illustrated in Fig. 4a-d, the electronic device 1 further comprising a user interface unit 103, a measurement unit 110 and a control unit 120. The user interface unit 103 is typically configured for input and output of information from/to a user of the electronic device 1. In one example user interface unit 103 is a touch sensitive display but can be any input/output device.

According to an aspect the measurement unit 110 detects and obtains a voltage value of the battery 40. In one example the voltage value is then used as an input parameter value for determining the State of Charge value of the battery 40. In one example data form a known discharge function, or curve, of the battery 40 together with the voltage value can be used in order to determine the State of Charge value of the battery 40.

In one example the voltage is measured and the State of Charge of the battery 40 is obtained by further measuring the battery temperature and the battery current.

The measurement unit 110 can be adapted to detect other measurement data than voltage such as impedance, resistance, current, heat, pressure, gravity, pH and other data relating to the State of Charge, SOC of the battery 40. According to an aspect, at least one of any known methods such as chemical method, voltage method, current integration method, Kalman filtering or pressure method is applied in order to obtain the State of Charge value.

According to an aspect the control unit 120 controls the charging of the battery 40. In one example the control unit 120 comprises at least one switch or circuit-breaker that can turn charging of the battery 40 on and off. In one example the processing circuitry 102 instructs the control unit 120 when and how to charge the battery 40.

As illustrated in Fig. 4a the electronic device 1 is a charging unit 10 within a battery device 400 that is connected to a power outlet 80. The battery device 400 may be any device making use of a battery 40 such as a portable electronic device or a vehicle. In one example the electronic device 1 is installed in a vehicle and connected to the battery 40 of the vehicle.

The battery device 400 may also be separated from the electronic device 1 as illustrated in Fig. 4b. In one example, the electronic device 1 illustrated in Fig. 4b, is a charging unit 10 separated from a battery device 400 and connected to a power outlet 80. In one example the electronic device 1 in Fig. 4b is a stationary charging unit 10 for an electronic vehicle installed in a garage. The power outlet 80 can be a normal power outlet in a private home or any industry standard power outlet 80 for professional use connected to an electricity grid. The power outlet 80 may also be connected to another battery device 400. In one example the power outlet 80 is located on another vehicle and connected to the battery of that vehicle.

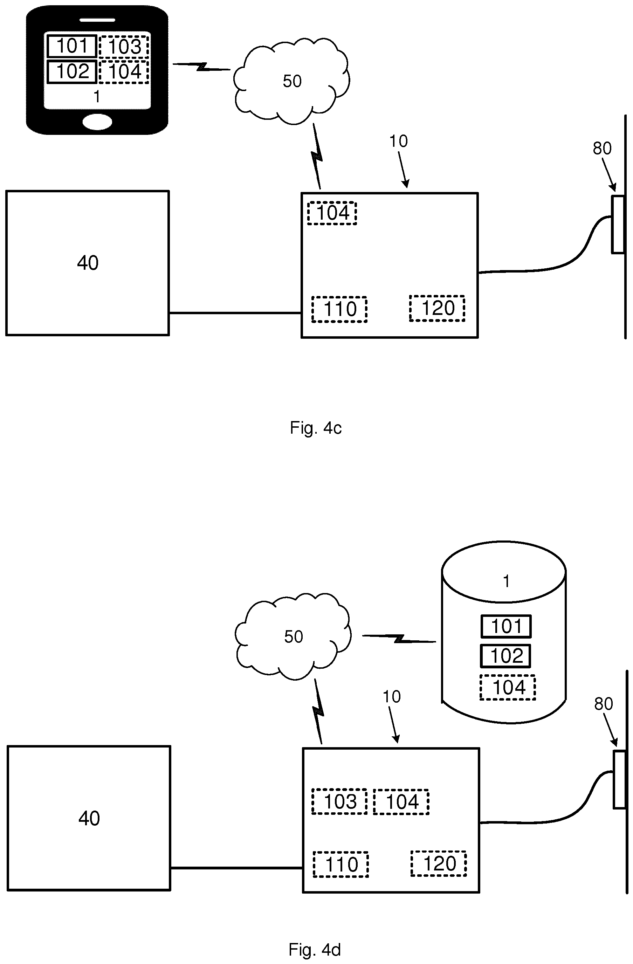

According to an aspect, as illustrated in Fig. 4c and 4d, the the electronic device 1 further comprising a communication unit 104 adapted to communicate via a communication network 50. In one example the communication network 50 is a standardized wireless local area network such as a Wireless Local Area Network, WLAN, Bluetooth™, ZigBee, Ultra-Wideband, Near Field Communication, NFC, Radio Frequency Identification, RFID, or similar network. In one example the communication network 50 is a standardized wireless wide area network such as a Global System for Mobile Communications, GSM, Extended GSM, General Packet Radio Service, GPRS, Enhanced Data Rates for GSM Evolution, EDGE, Wideband Code Division Multiple Access, WCDMA, Long Term Evolution, LTE, Narrowband-loT, 5G, Worldwide Interoperability for Microwave Access, WiMAX or Ultra Mobile Broadband, UMB or similar network. The communication network 50 can also be a combination of both a local area network and a wide area network. The communication network 50 can also be a wired network. According to an aspect the communication network 50 is defined by common Internet Protocols.

Fig. 4c illustrates an exemplary system according to an aspect. In the example illustrated with Fig. 4c the electronic device 1 is a portable electronic device, such as a smartphone or a tablet, that is connected to a charging unit 10 via a communication network 50. According to an aspect the charging unit 10 comprising a measurement unit 110 and a control unit 120. The charging unit may further comprise a communication unit 104.

Fig. 4d illustrates an exemplary system according to an aspect. In the example illustrated with Fig. 4c the electronic device 1 is a remote server such as a cloud computing device, that is connected to a charging unit 10 via a communication network 50. In this example the charging unit 10 may further comprise a user interface unit 103 and a communication unit 104.

The processing circuitry 102 is configured to cause the electronic device 1 to obtain a first State of Charge value SOC1 of the battery 40 at a first time t1 and receive input of a second time t2 that is indicating a time of a day that is after the first time t1, when the battery 40 should be charged to a second State of Charge value SOC2, the second State of Charge value SOC2 being higher than the first State of Charge value SOC1.

According to an aspect the second State of charge value SOC2 can also be range value, such as 65-85%. The second State of charge value SOC2 is the desired State of Charge value when the charging scheme has come to an end and the battery 40 has been charged accordingly. The second State of charge value SOC2 does not necessary need to be that the battery 40 is fully charged, but instead a lower State of Charge value. In one example the State of Charge value is obtained by the measurement unit 110.

According to an aspect the input of a second time t2 is received via the user interface unit 103. In one example the user interface unit 103 outputs a user interface for interaction with a user. A user of the electronic device may input a second time t2 via the user interface unit 103. In one example the user interface unit 103 is a touch sensitive display. Setting the time may be like setting an alarm on a smartwatch, indicating a time in the future. The input of a second time t2 can in one example be set to be repeated every working day or any day indicated by the user.

The processing circuitry 102 is then configured to cause the electronic device 1 to determine, based on the first State of Charge value SOC1 and the time from the first time t1 to the second time t2, a charging scheme out of a number of pre-defined charging schemes that is applicable for charging of the battery 40 to the second State of Charge value SOC2 and execute the determined charging scheme for charging of the battery 40 to the second state of charge value SOC2. According to an aspect the pre-defined charging scheme is any charging scheme that is adapted to keep State of Charge value of the battery 40 as low as possible for as long time as possible before charging the battery 40 to the second State of Charge value SOC2. In one example there is not sufficient time to apply a certain pre-defined charging scheme but instead normal charging is initiated. According to an aspect the processing circuitry 102 instructs the control unit 120 when and how to execute the determined charging scheme. Hence, the battery will be charged to the second State of Charge value SOC2 according to a applicable pre-defined charging scheme that is adapted for decreasing the calendar aging of the battery 40.

The pre-defined charging schemes are defined out from e.g. known parameters of the battery 40. In one example the parameters are physical parameters such as battery temperature, battery voltage, battery impedance etc. By knowing e.g. the time it takes to charge the battery 40 to the second State of Charge value SOC2 from any start State of Charge value, a certain pre-defined charging scheme can be applied that is suitable e.g. dependent on the time. A pre-defined charging scheme can be in form of a set of rules or instructions that are stored in the memory 101 of the electronic device 1 and processed by the processing circuitry 102 of the electronic device 1. According to an aspect a pre-defined charging scheme comprises a set of instructions. In one example the processing circuitry 102 instructs the control unit 120 when and how to charge the battery 40 according to the pre-defined charging scheme.

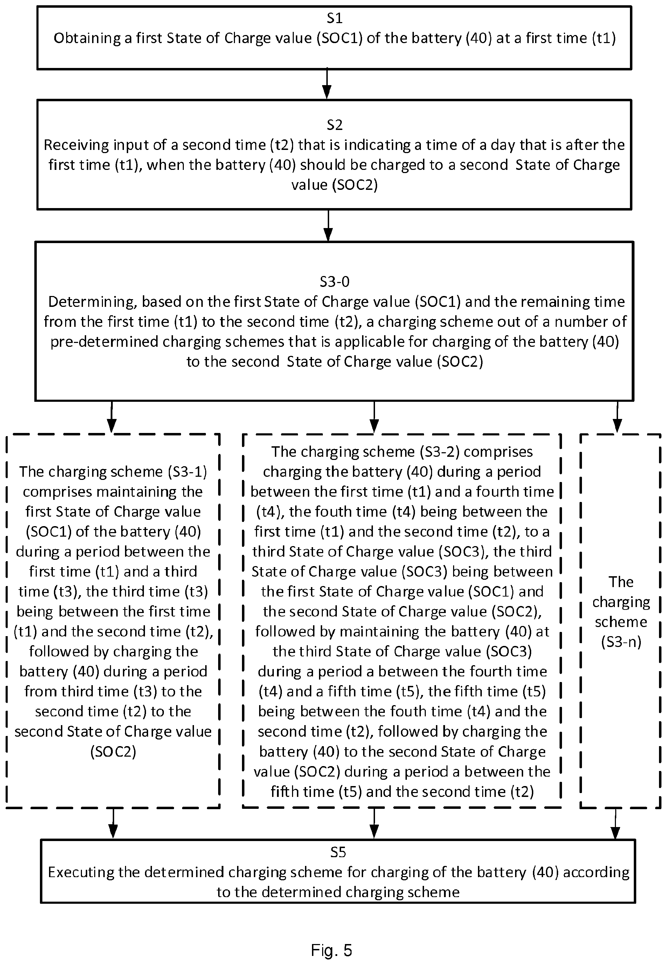

Reference is now made to Fig. 5 The invention proposes a method performed in an electronic device 1 for managing charging of a battery 40 for reducing calendar aging and improving the battery life time. The method comprising S1 obtaining a first State of Charge value SOC1 of the battery 40 at a first time t1. This is followed by S2 receiving input of a second time t2 that is indicating a time of a day that is after the first time t1, when the battery 40 should be charged to a second State of Charge value SOC2. The second State of Charge value SOC2 being higher than the first State of Charge value SOC1. The method then further comprises S3-0 determining, based on the first State of Charge value SOC1 and the time from the first time t1 to the second time t2, a charging scheme out of a number of pre-defined charging schemes that is applicable for charging of the battery 40 to the second State of Charge value SOC2. This is then followed by S5 executing the determined charging scheme for charging of the battery 40 to the second state of charge value SOC2. Hence, the battery will be charged to the second State of Charge SOC2 value according to a applicable pre-defined charging scheme that is adapted for decreasing the calendar aging of the battery 40.

According to an aspect, as illustrated in Fig. 5 and in Fig. 2, at least one of the pre-defined charging schemes S3-1 comprises maintaining the first State of Charge value SOC1 of the battery 40 during a period between the first time t1 and a third time t3, the third time t3 being between the first time t1 and the second time t2, followed by charging the battery 40 during a period from the third time t3 to the second time t2 to the second State of Charge value SOC2. Hence, the calendar aging decreases as the State of Charge of the battery is kept as low and as long as possible before charging the battery. In other words, the battery is charged so that the State of Charge of the battery reaches the second State of Charge value (SOC2) at the second time and not before that. As illustrated in Fig 2. during charging of the battery 40, in the period between time t3 and t2, the State of Charge of the battery 40 may increase linearly as illustrated with filled line in Fig.2, or increase according to any other function as illustrated with a dotted line in Fig.2. The time needed to charge the battery from the first State of Charge value SOC1 to the second State of Charge value SOC2 is dependent on how powerful the charging unit 10 is.

According to an aspect, as illustrated in Fig. 5 and Fig. 3, at least one of the pre-defined charging schemes S3-2 comprises charging the battery 40 during a period between the first time t1 and a fourth time t4, the fourth time t4 being between the first time t1 and the second time t2, to a third State of Charge value SOC3, the third State of Charge value SOC3 being between the first State of Charge value SOC1 and the second State of Charge value SOC2, followed by maintaining the battery 40 at the third State of Charge value SOC3 during a period a between the fourth time t4 and a fifth time t5, the fifth time t5 being between the fourth time t4 and the second time t2, followed by charging the battery 40 to the second State of Charge value SOC2 during a period a between the fifth time t5 and the second time t2. According to an aspect the third State of Charge value SOC3 is selected in order to reduce calendar aging and give the user sufficient charge in the battery for pure electric drive. Hence, the calendar aging decreases as the State of Charge of the battery is kept at a lower level, a level that at the same time provides for usage of the battery.

According to an aspect, as illustrated in Fig. 5, the charging scheme S3-n comprises charging the battery 40 according to any charging scheme that is adapted to keep State of Charge value of the battery 40 as low as possible for as long time as possible before charging the battery 40 to the second State of Charge value SOC2.

According to an aspect, the third State of Charge value SOC3 is a pre-set value for reducing calendar aging. Hence, an optimized State of Charge value that balance the calendar aging and at the same time provides a utilization of the battery can be chosen by e.g. a manufacturer of a battery or device utilizing the battery. In one example the third State of Charge value SOC3 is a pre-set so that the capacity is sufficient enough for a certain kind of usage of the battery 40. In the example of an electric vehicle, the third State of Charge value SOC3 may be pre-set so that the battery 40 of the electric vehicle have a certain capacity that is sufficient for a certain driving range, e.g. 50 km, at the third State of Charge value SOC3. In the example of e.g. a portable electronic device such as a smartphone the third State of Charge value SOC3 may be chosen so that there is sufficient capacity in the battery so that the smartphone can be used to make a 30 minutes long phone call or streaming a 2 hour video or similar.

According to an aspect the third State of Charge value SOC3 is a manually entered value by a user at the electronic device 1 for reducing calendar aging. In this case the user of the battery device 400 can decide if it is the effect of calendar aging or the battery utilization that should be prioritized. In one example the third State of Charge value SOC3 is a manually entered value so that the capacity is sufficient enough for a certain kind of usage of the battery 40. According to an aspect the manually entered value is entered via the user interface unit 103. Hence, an optimized State of Charge value that balance the calendar aging and at the same time provides a utilization of the battery can be chosen by e.g. a user of a battery or device utilizing the battery. This means that a user can decide what third State of Charge level that is wanted in order to utilize the battery in a most effective way considering calendar aging.

According to an aspect the charging scheme is dependent on at least one of the first State of Charge value SOC1; the second State of Charge value SOC2; or the time needed to charge the battery 40 from the first State of Charge value SOC1 to the second State of Charge value SOC2. This means that different charging schemes can be applied accordingly. With a known charge curve of a battery 40, e.g. known voltage vs. State of Charge, SOC, the time needed to charge a battery from a first State of Charge value SOC1 to second State of Charge value SOC2 a can be determined. According to an aspect the charging scheme is further dependent on the battery temperature.

According to an aspect the second State of Charge value SOC2 is the maximum charging capacity of the battery 40. In other words, charging the battery to the second State of Charge value SOC2 means charging the battery until it is fully charged.

According to an aspect the second State of Charge value SOC2 is below the maximum charging capacity of the battery 40 and manually entered by a user at the electronic device. This means that the second State of Charge value can be set by a user of the battery or device utilizing the battery. In one example a user of an electrical vehicle can set the maximum range in distance needed for the next day before charging the previous night, rather than always charging to the maximum State of Charge value, in order to utilize the battery in a most effective way considering calendar aging.

According to an aspect the electronic device 1 is configured to perform any of the aspects of the method described above.

The invention further proposes a computer program comprising computer-readable code which, when executed by the processing circuitry 102 of the electronic device 1, causes the electronic device 1 to perform the method. Hence the code can be reproduced and run on plural different electronic devices 1 to perform the method. According to an aspect, the method is carried out by instructions in a computer program that is downloaded and run on the electronic device 1. In one example the computer program is a so called app. The app is either free or can be bought by the user of the electronic device 1. The same app can generate a user interface for user interaction via a user interface unit 102 of an electronic device 1. The invention further proposes a computer program product comprising a non-transitory memory storing a computer program. Hence, the memory can maintain the code so that the method can be executed at any time.

In the drawings and specification, there have been disclosed exemplary aspects of the invention. However, many variations and modifications can be made to these aspects. All the different aspects of the invention can be used in any combination. Accordingly, although specific terms are employed, they are used in a generic and descriptive sense only and not for purposes of limitation, the scope of the invention being defined by the following claims.

## Claims

1. A method performed in an electronic device (1) for managing charging of a battery (40) for reducing calendar aging and improving the battery life time, the method comprising:
- (S1) obtaining a first State of Charge value (SOC1) of the battery (40) at a first time (t1),
- (S2) receiving input of a second time (t2) that is indicating a time of a day that is after the first time (t1), when the battery (40) should be charged to a second State of Charge value (SOC2), the second State of Charge value (SOC2) being higher than the first State of Charge value (SOC1),
- (S3-0) determining, based on the first State of Charge value (SOC1) and the time from the first time (t1) to the second time (t2), a charging scheme out of a number of pre-defined charging schemes that is applicable for charging of the battery (40) to the second State of Charge value (SOC2), and
- (S5) executing the determined charging scheme for charging of the battery (40) to the second state of charge value (SOC2).

2. The method according to claim 1, wherein (S3-1) at least one of the pre-defined charging schemes comprises maintaining the first State of Charge value (SOC1) of the battery (40) during a period between the first time (t1) and a third time (t3), the third time (t3) being between the first time (t1) and the second time (t2), followed by charging the battery (40) during a period from the third time (t3) to the second time (t2) to the second State of Charge value (SOC2).

3. The method according to claim 1, wherein (S3-2) at least one of the pre-defined charging schemes comprises charging the battery (40) during a period between the first time (t1) and a fourth time (t4), the fourth time (t4) being between the first time (t1) and the second time (t2), to a third State of Charge value (SOC3), the third State of Charge value (SOC3) being between the first State of Charge value (SOC1) and the second State of Charge value (SOC2), followed by maintaining the battery (40) at the third State of Charge value (SOC3) during a period a between the fourth time (t4) and a fifth time (t5), the fifth time (t5) being between the fourth time (t4) and the second time (t2), followed by charging the battery (40) to the second State of Charge value (SOC2) during a period a between the fifth time (t5) and the second time (t2).

4. The method according to claim 3, wherein the third State of Charge value (SOC3) is a pre-set value for reducing calendar aging.

5. The method according to claim 3, wherein the third State of Charge value (SOC3) is a manually entered value by a user at the electronic device (1) for reducing calendar aging.

6. The method according to claim 1, wherein the charging scheme is dependent on at least one of:
- the first State of Charge value (SOC1);
- the second State of Charge value (SOC2); or
- the time needed to charge the battery (40) from the first State of Charge value (SOC1) to the second State of Charge value (SOC2).

7. The method according to claim 1 wherein the second State of Charge value (SOC2) is the maximum charging capacity of the battery (40).

8. The method according to claim 1 wherein the second State of Charge value (SOC2) is below the maximum charging capacity of the battery (40) and manually entered by a user at the electronic device (1).

9. An electronic device (1) for managing charging of a battery (40) for reducing calendar aging and improving the battery life time, the electronic device (1) comprising:
• a memory (101) and
• a processing circuitry (102), configured to cause the electronic device (1) to:
- obtain a first State of Charge value (SOC1) of the battery (40) at a first time (t1),
- receive input of a second time (t2) that is indicating a time of a day that is after the first time (t1), when the battery (40) should be charged to a second State of Charge value (SOC2), the second State of Charge value (SOC2) being higher than the first State of Charge value (SOC1),
- determine, based on the first State of Charge value (SOC1) and the time from the first time (t1) to the second time (t2), a charging scheme out of a number of pre-defined charging schemes that is applicable for charging of the battery (40) to the second State of Charge value (SOC2), and
- execute the determined charging scheme for charging of the battery (40) to the second state of charge value (SOC2).

10. An electronic device (1) according to claim 9, wherein the charging scheme comprises maintaining the first State of Charge value (SOC1) of the battery (40) during a period between the first time (t1) and a third time (t3), the third time (t3) being between the first time (t1) and the second time (t2), followed by charging the battery (40) during a period from the third time (t3) to the second time (t2) to the second State of Charge value (SOC2).

11. An electronic device (1) according to claim 9, wherein the charging scheme comprises charging the battery (40) during a period a period between the first time (t1) and a fourth time (t4), the fourth time (t4) being between the first time (t1) and the second time (t2), to a third State of Charge value (SOC3), the third State of Charge value (SOC3) being between the first State of Charge value (SOC1) and the second State of Charge value (SOC2), followed by maintaining the battery (40) at the third State of Charge value (SOC3) during a period a between the fourth time (t4) and a fifth time (t5), the fifth time (t5) being between the fourth time (t4) and the second time (t2), followed by charging the battery (40) to the second State of Charge value (SOC2) during a period a between the fifth time (t5) and the second time (t2).

12. The electronic device (1) according to claim 11, wherein the third State of Charge value (SOC3) is a pre-set value for reducing calendar aging.

13. The electronic device (1) according to claim 11, wherein the third State of Charge value (SOC3) is a manually entered value by a user at the electronic device (1) for reducing calendar aging.

14. The electronic device (1) according to claim 9, wherein the second State of Charge value (SOC2) is the maximum charging capacity of the battery (40).

15. The electronic device (1) according to claim 9, wherein the second State of Charge value (SOC2) is below the maximum charging capacity of the battery (40) and manually entered by a user at the electronic device (1).
